# EUROPEAN PATENT SPECIFICATION

(11) **EP 3 145 121 B1**
(45) Date of publication and mention of the grant of the patent: **11.11.2020**
(21) Application number: 16188934.0
(22) Date of filing: 15.09.2016
(51) Int. Cl.: H04L 12/24

(54) **CONVERGED NETWORK SYSTEM INDEPENDENT OF ACCESS SCHEME, AND METHOD THEREOF**
KONVERGIERTES NETZWERKSYSTEM UNABHÄNGIG VON ZUGANGSSCHEMA UND VERFAHREN DAVON
SYSTÈME DE RÉSEAU CONVERGENT INDÉPENDANT DE RÉGIMES D'ACCÈS ET PROCÉDÉ ASSOCIÉ

(30) Priority: 18.09.2015 KR 20150132450; 29.08.2016 KR 20160110303
(43) Date of publication of application: 22.03.2017
(73) Proprietor: Electronics and Telecommunications Research Institute, Daejeon 34129 (KR)
(72) Inventor: PARK, No Ik, 309-601 Daejeon (KR); KO, Nam Seok, 101-202 Daejeon (KR); KIM, Jae Ho, 113-1103 Gyeryong-si (KR); KIM, Changki, 114-308 Daejeon (KR)
(74) Representative: Betten & Resch

(56) References cited:
- EP-A2- 1 453 248
- US-B2- 7 889 693

## Description

### BACKGROUND OF THE INVENTION

### (a) Field of the Invention

The present invention relates to a network system and a method thereof. More particularly, the present invention relates to a converged network system independent of a wired or wireless access scheme capable of converging and accommodating various wired access networks and wireless access networks (for example, an international mobile telecommunication (IMT)-2020 wireless technology (5G), wireless fidelity (WiFi), and the like) on the basis of an Internet protocol (IP), and a method thereof.

### (b) Description of the Related Art

An evolved packet system (EPS), which is a 3^{rd} generation partnership project (3GPP) specification-based 4G mobile communication network, consists of long term evolution (LTE) in a wireless domain and evolved packet core (EPC), which is a network after a base station. In 3GPP, a general packet radio service (GPRS) was introduced in order to provide data communication in a 2G global system for mobile communications (GSM) network, and functional characteristics and network-structural characteristics of the GPRS have been subsequently superseded in 3G and 4G. They are hierarchical traffic accommodating structures of a serving gateway (SGW) of the EPC, and a packet data network (PDN) gateway (PGW) and a GPRS tunneling protocol (GTP) tunneling scheme.

Document EP 1 453 248 A2 discloses a network control system for multi-access control (Figure 1 and § 18). The system of D1 already includes a unified gateway (access routers) and a unified control entity managing and controlling the unified gateways (network controller 125). Document US 7 889 693 B2 discloses a system for providing Quality of Service in a broadband convergence network deploying mobile IP.

The conventional network-structural characteristics described above have exposed various problems as follows in providing service in the future 5G era.

First, in a conventional network, a node (PGW) through which all traffic generated from user equipment should necessarily pass is present in a 4G mobile core, such that a concentration of the traffic in the network is intensified. This is due to a GTP tunneling technology for providing a service similar to that of a circular network on a packet network.

In addition, since a data center, a content server, and the like may not be disposed forward toward a subscriber interface due to a GTP tunnel structure in the conventional network, there is a limitation in a data distribution structure.

In addition, in the conventional network, an environment that may simultaneously use all available radio resources (5G+WiFi and the like) is required in order to increase user bandwidth. However, in a current network structure in which separate networks are built up and operated for each of heterogeneous wireless access technologies, it is impossible to efficiently use heterogeneous access resources.

In addition, in the conventional network, a mobility anchor point such as the PGW is required in order to provide mobility. As a result, a triangular routing route for traffic is generated after handover, such that there are risks of inefficiency and a single point of failure of a traffic transfer route.

In addition, in the conventional network, since a mobile communication core network is dependent on a technology scheme of an access, whenever access schemes such as 2G/3G/4G and the like emerge, new core networks are required, which is expensive. Therefore, there is a limitation in service interworking.

The above information disclosed in this Background section is only for enhancement of understanding of the background of the invention and therefore it may contain information that does not form the prior art that is already known in this country to a person of ordinary skill in the art.

### SUMMARY OF THE INVENTION

The present invention has been made in an effort to provide a converged network system independent of a wired or wireless access technology having advantages of attempting to optimize provision of various future services in the future and providing efficiency of investment and operation of an infrastructure by accommodating various network access technologies such as an International Mobile Telecommunication (IMT)-2020 wireless technology (5G), wireless fidelity (WiFi), a wired technology, and the like, as All-IP-based converged control technology and introducing a common signaling system and a mobility control system.

Technical objects of the present invention are not limited to the technical objects described above, and other technical objects that are not mentioned may be clearly understood by a person of ordinary skill in the art from the following description.

An exemplary embodiment of the present invention provides a converged network system as defined by the claims.

### BRIEF DESCRIPTION OF THE DRAWINGS

FIG. 1 is a schematic view showing a multi-network structure including a general 3G network, a 4G network, a wireless fidelity (WiFi) network, and a wired network.
FIG. 2 is a view showing a structure in which a general packet radio service (GPRS) tunneling protocol (GTP) is used in a general 4G network.
FIG. 3A is an example of a schematic view of a converged network system independent of a wired or wireless access technology according to an exemplary embodiment of the present invention.
FIG. 3B is another example of a schematic view of a converged network system independent of a wired or wireless access technology according to an exemplary embodiment of the present invention.
FIG. 3C is a flowchart for describing an operation concept of a converged network system according to an exemplary embodiment of the present invention.
FIG. 4A is a view for describing an interface signaling system between a user equipment-mobility management entity (MME) in an existing evolved packet core (EPC).
FIG. 4B is a view for describing an interface signaling system between user equipment (UE) and a unified control entity (UCE) through a base station (5GBS) in an International Mobile Telecommunication (IMT)-2020 5G access scheme in a converged network system according to an exemplary embodiment of the present invention.
FIG. 4C is a view for describing an interface signaling system between user equipment (UE) and a UCE through a WiFi access point in a WiFi access scheme in a converged network system according to an exemplary embodiment of the present invention.
FIG. 5A is a view for describing mobility support in an existing mobile communication system.
FIG. 5B is a view for describing anchor-free mobility control through a UCE in a converged network system according to an exemplary embodiment of the present invention.
FIG. 5C is a view for describing wired or wireless Intra-GW mobility control in a converged network system according to an exemplary embodiment of the present invention.
FIG. 5D is a view for describing a detailed example of wireless Intra-GW mobility control in a converged network system according to an exemplary embodiment of the present invention.
FIG. 5E is a view for describing dispersion and transmission of IP flows requiring a high bandwidth in a converged network system according to an exemplary embodiment of the present invention.
FIG. 6 is a view for describing an example of a method of implementing a converged network system according to an exemplary embodiment of the present invention.

### DETAILED DESCRIPTION OF THE EMBODIMENTS

Hereinafter, some exemplary embodiments of the present invention will be described in detail with reference to the accompanying drawings. It is to be noted that the same components will be denoted by the same reference numerals throughout the accompanying drawings. In addition, when it is determined that a detailed description for well-known configurations or functions related to the present invention may obscure the gist of an exemplary embodiment of the present invention, it will be omitted.

Terms such as first, second, A, B, (a), (b), and the like will be used to describe components according to an exemplary embodiment of the present invention. These terms are used only in order to distinguish any component from other components, and a feature, a sequence, or the like, of the corresponding component is not limited by these terms. In addition, unless defined otherwise, all terms used in the present specification, including technical and scientific terms, have the same meanings as those that are generally understood by those skilled in the art to which the present invention pertains. It should be interpreted that terms defined by a generally used dictionary are identical with the meanings within the context of the related art, and they should not be ideally or excessively formally interpreted unless the context clearly dictates otherwise.

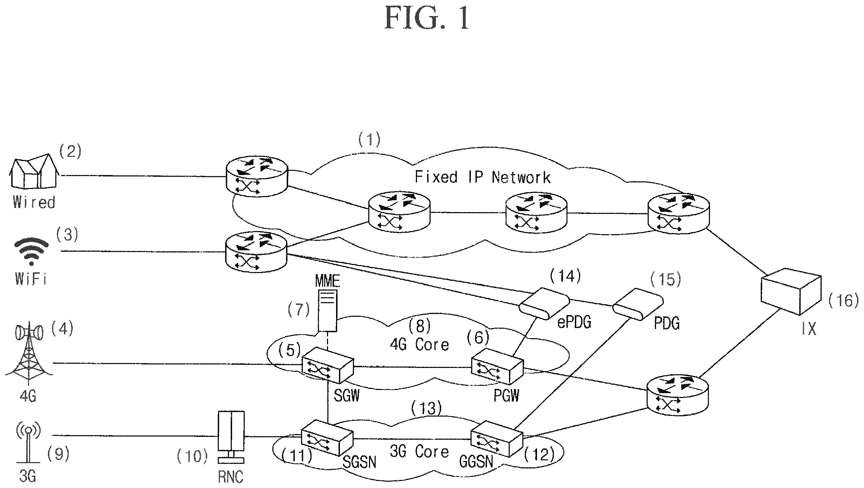

FIG. 1 is a schematic view showing a multi-network structure including a general 3G network, a 4G network, a wireless fidelity (WiFi) network, and a wired network.

A wired internet protocol (IP) network 1 for a general Internet accommodates a wired subscriber 2 and a WiFi 3 communication. In an evolved packet system (EPS) called a 4G network, a base station (eNodeB (eNB)) 4 to which a long term evolution (LTE) radio interface is applied is connected to an evolved packet core (EPC) 8, which is a 4G core network (CN), and the EPC 8 includes a mobility management entity (MME) 7, a serving gateway (SGW) 5, and a packet data network (PDN) gateway (PGW) 6. In a 3G network, a base station (NodeB (NB)) 9 to which a radio interface is applied is connected to a mobile packet core 13 through a radio network controller (RNC) 10, and the mobile packet core 13 includes a serving general packet radio service (GPRS) support node (SGSN) 11 and a gateway GPRS support node (GGSN) 12. The WiFi and the 3G core network interwork with each other through a packet data gateway (PDG) 15, and the WiFi and the 4G core network interwork with each other through an enhanced PDG (ePDG) 14. Meanwhile, the wired IP network 1 and the 3G/4G mobile communication networks 4 and 9 interwork with each other through an internet exchange point (IX) 16.

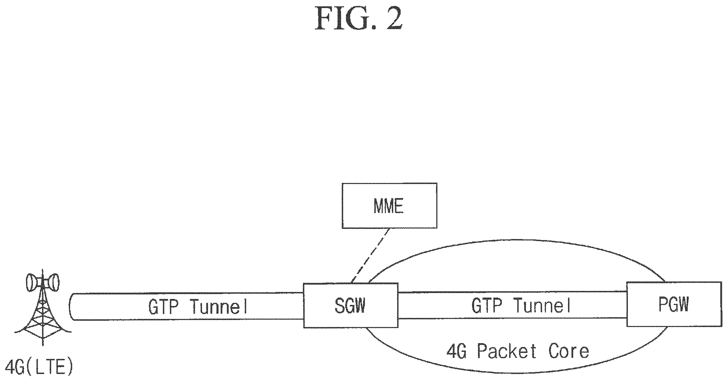

FIG. 2 is a view showing a structure in which a general packet radio service (GPRS) tunneling protocol (GTP) is used in a general 4G network.

In the structure of FIG. 2, a tunneling method similar to a traditional line service is applied between a base station (eNB) and a serving gateway (SGW) and between the serving gateway (SGW) and a PDN gateway (PGW) for the purpose of separation of traffic for each subscriber/each service and billing through the separation of the traffic on a 4G packet network. However, complexity of traffic control is high, and evolution to an All-IP-based converged network is hindered.

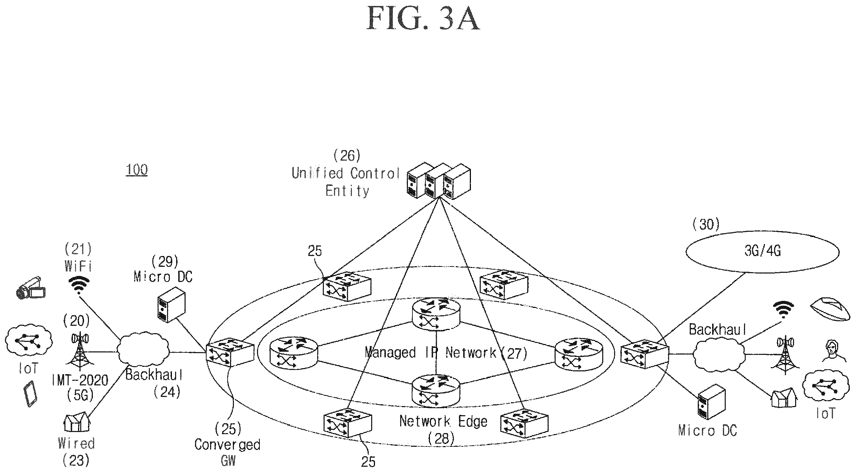

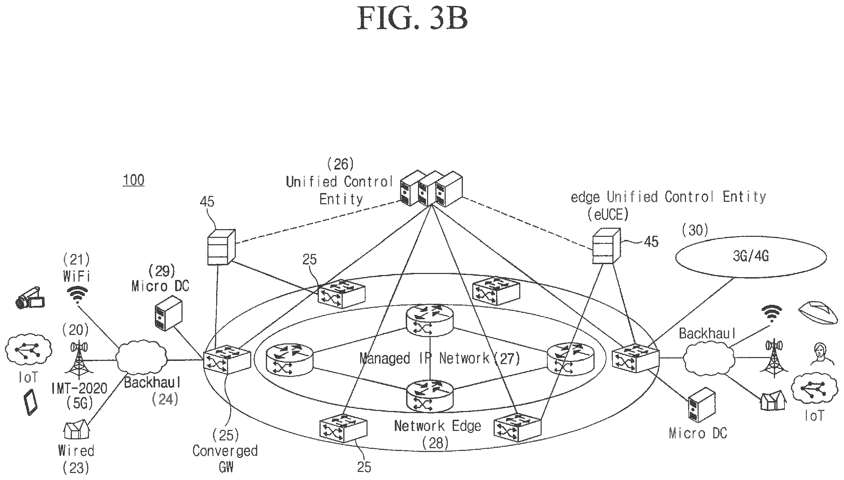

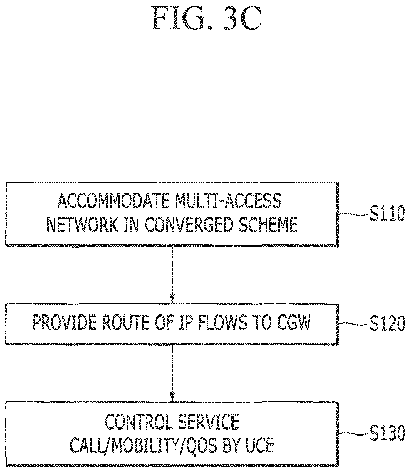

FIG. 3A is an example of a schematic view of a converged network system 100 independent of a wired or wireless access technology according to an exemplary embodiment of the present invention. FIG. 3B is another example of a schematic view of a converged network system 100 independent of a wired or wireless access technology according to an exemplary embodiment of the present invention. FIG. 3C is a flowchart for describing an operation concept of a converged network system 100 according to an exemplary embodiment of the present invention.

Referring to FIG. 3A, the converged network system 100 according to an exemplary embodiment of the present invention includes a plurality of converged gateways (CGWs) 25 dispersed and disposed at edges 28 on a converged wired IP network 27 including routers for routing of traffic transmission and a unified control entity (UCE) 26 managing the plurality of CGWs 25 through converged signal processing. In addition, the converged network system 100 may further include a micro data center 29 that may be disposed forward toward a subscriber interface on a network. The micro data center 29 may store and manage predetermined data required for operating a service therein.

This is to secure flexibility of the network by dispersing and accommodating surging traffic in the 5G era, and the converged gateway (CGW) 25 accommodates an International Mobile Telecommunication (IMT)-2020 5G base station (5GBS) 20, an access point 21 for WiFi communication, homogeneous access nodes such as wired nodes 23 for communication with wired subscribers, or the like, and two or more kinds of heterogeneous access nodes (irrelative to whether they are wired nodes or wireless nodes) so as to communicate with the IMT-2020 5G base station (5GBS) 20, the access point 21 for WiFi communication, the homogeneous access nodes, and the two or more kinds of heterogeneous access nodes through a backhaul 24 (S110). In addition, the converged gateway (CGW) 25 may also accommodate a 3G/4G mobile communication network 30 so as to communicate with the 3G/4G mobile communication network 30.

Basic IP packet-based communication control rather than GTP-based communication control is performed between the IMT-2020 base station (5GBS) 20 and the converged gateway (CGW) 25, similar to between the WiFi access point (APs) (or the access controller (AC)) 21 and the converged gateway (CGW) 25 or between the wired node 23 and the converged gateway (CGW) 25. The IP packet-based communication control means that IP flows defining sessions of individual IP layers are directly controlled regardless of a kind of access.

The converged gateway (CGW) 25 receives a route of IP flows (data) transmitted/received on the network from the unified control entity (UCE) 26 providing a data route through a micro-flow traffic control function (S120).

The unified control entity (UCE) 26 manages the converged gateways (CGWs) 25, and is in charge of user authentication control, access control, user equipment mobility control, and service call control for the IP flows through the converged gateways (CGWs) 25 (for example, connection/establishment or the like), IP mobility in homogeneous accesses (for example, wireless access-wireless access) and IP mobility between heterogeneous accesses (for example, wired access-wireless access, IMT-2020 access-WiFi access, or the like) controls, quality of service (QoS) control, and the like (S130).

Meanwhile, referring to FIG. 3B, the converged network system 100 according to an exemplary embodiment of the present invention includes a plurality of converged gateways (CGWs) 25, a unified control entity (UCE) 26 managing the plurality of CGWs 25 through converged signal processing, and edge unified control entities 45 dispersed at edges and controlling one or more converged gateways 25. In order to logically perform at least one of a user authentication control function, an access control function, a user equipment mobility control function, a service call control function for IP flows, a mobility control function, and a QoS control function of the unified control entity 26, one or more edge unified control entities (eUCEs) 45 may be logically dispersed and disposed at the edges of the network. In addition, the edge unified control entities (eUCEs) 45 control one or more converged gateways 25, and may transmit and receive required signals to and from the unified control entity (UCE) 26 through communication with the unified control entity 26 to control the unified control entity 26.

### <Data Layer>

In data traffic control between the converged gateway (CGW) 25 and the IMT-2020 base station (5GBS) 20 newly defined in the present invention, the present invention provides basic IP packet-based control rather than GTP-based control. For this purpose, in the present invention, the unified control entity (UCE) 26 provides a data route of transmission/reception IP flows through a micro-flow traffic control function so that traffic for each subscriber/each service may be separated and managed/controlled in the IMT-2020 base station (5GBS) 20 and the converged gateway (CGW) 25.

That is, in the present invention, the data route is provided by allowing the traffic for each subscriber/each service to be separated and managed/controlled in an IP layer for signals (data) moving up from a lower layer of IMT-2020 through the micro-flow traffic control function. In the present invention, a scheme of securing a data route by mapping a radio bearer identifier (ID) (RBID) and a GTP tunnel endpoint ID (TEID) between eNB-SGW in an eNB 4 of existing 4G is not used. In the present invention, the data route is provided by mapping an RBID or a radio channel ID defined in IMT-2020, flow information (5-tuple information) of an IP packet, and information that may define packet flows (IP-flows) instead of the existing scheme described above.

According to the present invention, the converged gateway (CGW) 25 may control/manage traffic for all user equipment (UE) in the same scheme regardless of access of the IMT-2020 base station (5GBS) 20, the WiFi access point 21, the wired node 23, or the like. In addition, the converged gateway (CGW) 25 performs QoS control on user traffic in the same scheme regardless of an access technology, and performs an additional function for providing IP mobility. Meanwhile, the converged gateway (CGW) 25 extracts billing information, measurement information, and the like of the user traffic on the basis of the packet flows (IP-flows).

In the present invention, the user equipment (UE) may include wireless user equipment such as a smartphone, a wearable device capable of performing an audio/video call, a tablet personal computer (PC), a laptop PC, and the like, that may access the converged gateway (CGW) 25 through the IMT-2020 base station 20 or the WiFi access point 21, and may include wired user equipment such as a desktop PC, other communication-dedicated user equipment, and the like, that may access the converged gateway (CGW) 25 through the wired node 23 such as a modem or the like.

### <Signal Layer>

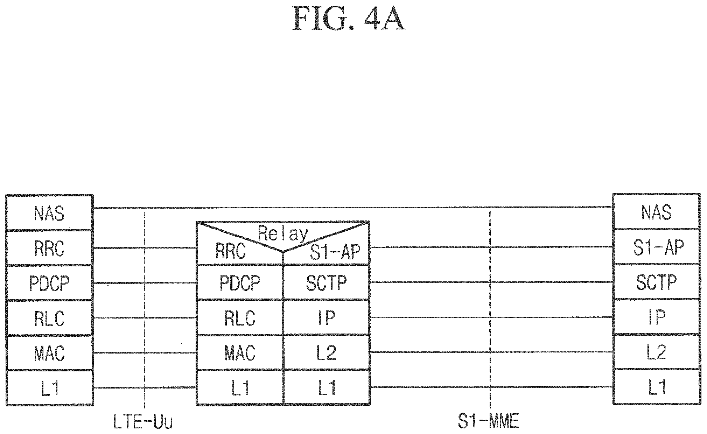

In a signal layer of the existing EPC 8, the respective signaling systems between user equipment-eNB, between MME-user equipment, between MME-eNB, and between MME-SGW are present (see, for example, 3GPP TS24.301, TS39.413, TS29.272, and TS23.401 standards). These signaling systems are very different from a control scheme in an existing wired network, such that a separate network depending on an access technology should be built up. Particularly, in the existing EPC 8, signaling between user equipment-MME is performed through an interface defined on user equipment-eNB or eNB-MME (see FIG. 4A). This is dependent on an access technology and a unique network technology, such that a single network independent of the access technology may not be built up. Therefore, in the present invention, a signaling system between user equipment-UCE (corresponding to user equipment-MME in 4G) has a structure in which processing may be performed independent of a specific access technology and network technology regardless of an access scheme such as whether or not an access is homogeneous access, whether an access is wired access or wireless access, or the like, using the same signaling system.

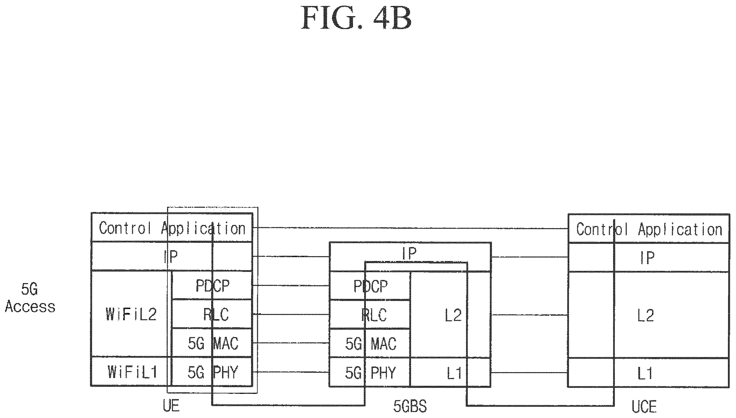

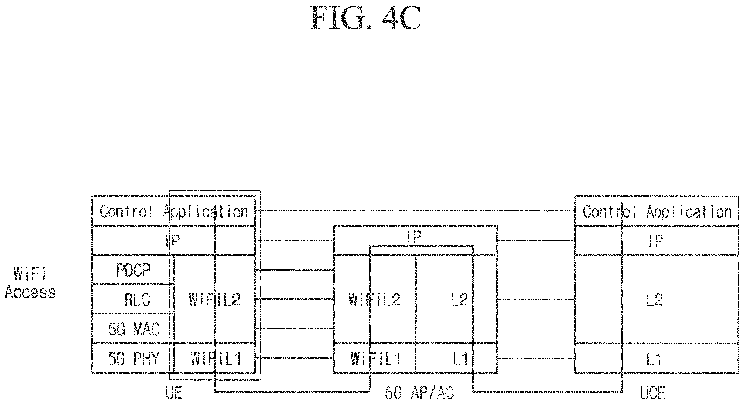

For example, in the present invention, as shown in FIGS. 4B and 4C, even though the user equipment (UE) communicates with intermediate nodes (access nodes) supporting different access schemes, such as the base station (5GBS), the WiFi access point 21, or the like, using different signaling systems for interfacing, the interfacing may be performed regardless of an access scheme (independent of the access scheme) using the same signaling system between the intermediate nodes and the unified control entity (UCE) 26.

In an example FIG. 4B, in the case of an IMT-2020 5G access, a signaling layer of the user equipment (UE) includes a control application layer, an IP layer, a packet data convergence protocol (PDCP) layer, a radio link control (RLC) layer - a 5G media access control (MAC) layer, and a 5G physical (PHY) layer, and may interface with the base station (5GBS) by the hierarchical structure as described above. The base station (5GBS) and the unified control entity (UCE) 26 interface with each other using the same signaling system (IP- L2-L1), and the unified control entity (UCE) 26 has a control application layer at an upper portion.

In an example of FIG. 4C, in the case of WiFi access, a signaling layer of the user equipment (UE) includes a control application layer, an IP layer, a WiFi L2 layer, and a WiFi L1 layer, and may interface with the WiFi access point 21 by the hierarchical structure as described above. The WiFi access point 21 and the unified control entity (UCE) 26 interface with each other using the same signaling system (IP- L2-L1), and the unified control entity (UCE) 26 has a control application layer at an upper portion.

Meanwhile, an existing 4G signaling system processes a GTP-control (C) signal for the purpose of GTP tunneling similar to a line service on the IP network, such that the signaling system itself is complicated. In the LTE, all services have been provided as a line-based service. For example, a voice over LTE (VoLTE) service has been generalized in an audio call. Particularly, an Internet of things (loT) service that will be generalized in the future has characteristics that a small amount of data is intermittently transmitted. In this case, it is not easy to apply a complicated signaling system for providing a line-based service. Therefore, in the present invention, a light-weight signaling system for providing a connectionless service may be provided.

### <Converged Resource Management>

In the present invention, converged management for heterogeneous radio resources in an IMT-2020 region and a WiFi region is performed in order to maximize use efficiency of radio resources. The unified control entity (UCE) 26, which is a central control platform, manages the converged gateway (CGW) 25, and collects used bandwidths per cell, the number of used radio channels per cell, the number of subscribers per cell, the number of subscriber traffic sessions per cell, and the like, from the IMT-2020 region and the WiFi region on the basis of IP packets transmitted/received through this, and manages them in a converged scheme. The converged management of the radio resources is to hand subscribers over to cells (homogeneous cells or heterogeneous cells of the IMT-2020 region and the WiFi region) having many available radio resources depending on utilization of the radio resources of the cells, and this function will be further described later.

### <Anchor-free IP Mobility Control through Flow Control of CGW in UCE>

For the purpose of IP mobility control, in the present invention, an IP address system separating an identifier (ID) for identifying the user equipment (UE) and a locator for transmitting data from each is introduced. The ID is used for identification and authentication of the user equipment (UE), and the locator is used for registration/management of loaction information of the user equipment (UE) and transmission of subscriber traffic.

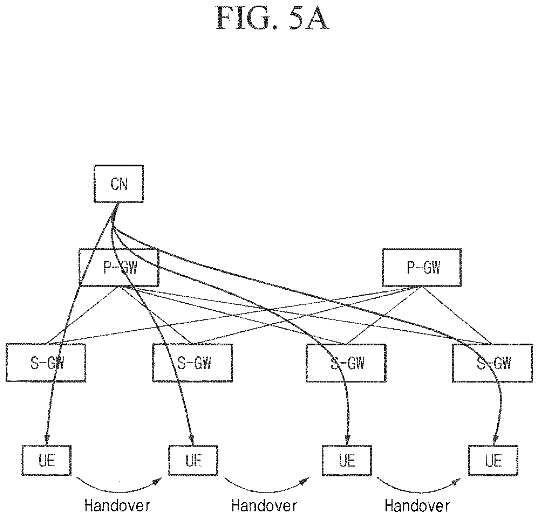

FIG. 5A is a view for describing mobility support in an existing mobile communication system.

A feature of an existing mobility control technology is that a mobility anchor point through which traffic of the user equipment (UE) should always pass, such as a home agent (HA) of a mobile IP technology, is present. Particularly, as shown in FIG. 5A, in a 3GPP specification, even though the user equipment (UE) moves to other serving gateway (SGW) regions in a state in which a mobility specification between PDN gateways (PGWs) is not defined, the user equipment should always access a mobile communication network core network (CN) via an initially accessed PDN gateway (PGW) for the purpose of handover, which is inefficient. This mobility providing structure causes a problem in providing a low delay service or the like that will be introduced in the future as well as a waste of network resources due to non-optimization of a traffic route.

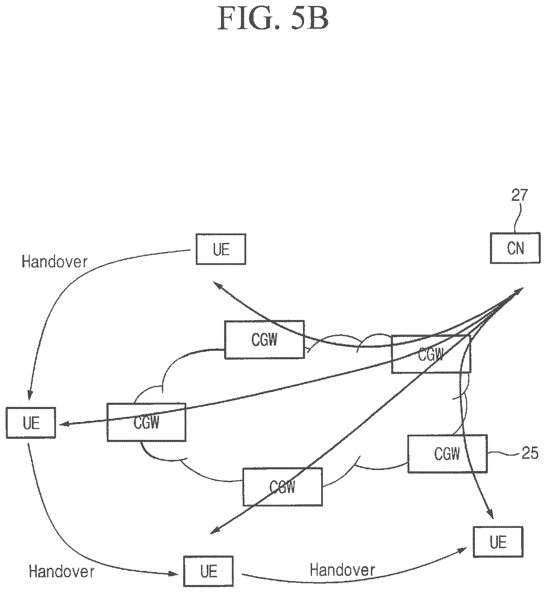

FIG. 5B is a view for describing anchor-free mobility control through a UCE 26 in a converged network system 100 according to an exemplary embodiment of the present invention.

In the present invention, as shown in FIG. 5B, an anchoring point is removed in an existing mobility support, and anchor-free mobility in which traffic route optimization is possible so that the UE accesses the network 27 edge-by-edge of the converged gateways (CGWs) is provided. The unified control entity 26 of the present invention manages and controls mobility of the user equipment and mobility of IP flows so that the user equipment (UE) accessing the network 27 may be handed over through the converged gateways (CGWs) 25 dispersed and disposed at the edges 28 of the wired IP network 27, while managing the user equipment (UE) on the basis of the IP address system separating the ID and the locator from each other. Even though the user equipment (UE) accesses the network 27 through access networks having various characteristics, such as an IMT-2020 network, a WiFi network, a wired network, and the like, the converged gateways (CGWs) 25 support mobility depending on control of the unified control entity (UCE) 26 interworking with the user equipment (UE) with respect to movement of the user equipment (UE), thereby making it possible to support the user equipment (UE) so that a seamless service may be provided to the user equipment (UE) through a converged gateway that is closest to the user equipment.

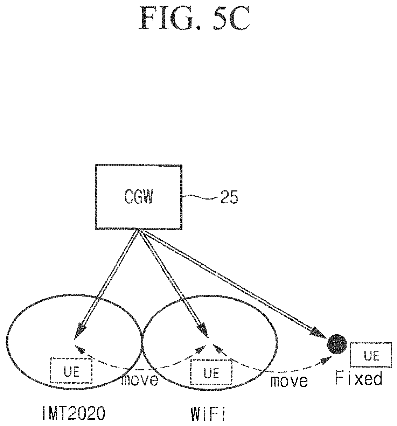

FIG. 5C is a view for describing wired or wireless Intra-GW mobility control in a converged network system 100 according to an exemplary embodiment of the present invention.

As shown in FIG. 5C, the converged gateway (CGW) 25 may not only support mobility (Inter-GW mobility) between wireless access networks through control of the unified control entity (UCE) 26 sensing movement of the user equipment (UE), but may also support mobility (Intra-GW mobility) between a wired access network (wired IP) and a wireless access network (IMT-2020/WiFi) with respect to the user equipment (UE) accessing one converged gateway (CGW) 25. Here, support of Intra-GW mobility between different wireless access networks (IMT-2020 and WiFi) is included. The converged gateway 25 providing the mobility through the control of the unified control entity 26 may be connected to and be controlled by the edge unified control entity 45 as well as the unified control entity 26. In the case in which the converged gateway 25 is connected to the edge unified control entity 45, since the Intra-GW mobility is mobility within the converged gateway 25, it is sufficient for the edge unified control entity 45 to perform control. However, in the case in which the converged gateways 25 are connected to different edge unified control entities 45 in order to support mobility between the converged gateways 25(namely Inter-GW mobility), it may also be required for the edge unified control entities 45 and the unified control entity 26 to interwork with each other to perform control.

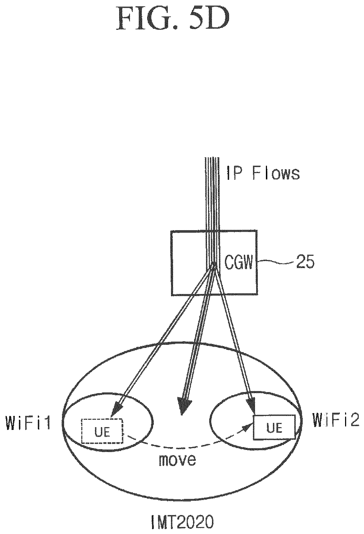

FIG. 5D is a view for describing a detailed example of a wireless Intra-GW mobility control in a converged network system 100 according to an exemplary embodiment of the present invention.

As shown in FIG. 5D, in the case in which two or more WiFi access points (WiFi1/WiFi2) are installed in a zone of an IMT-2020 access scheme, the converged gateway (CGW) 25 may determine states of available resources on the basis of converged resource management of heterogeneous access networks depending on control of the unified control entity (UCE) 26, may divide and manage/control traffic of a plurality of IP flows in an IP flow unit, and may support IP flow mobility with respect to movement of the user equipment (UE) simultaneously accessing a multi-access network such as IMT2020, WiFi1/WiFi2, or the like, as described above.

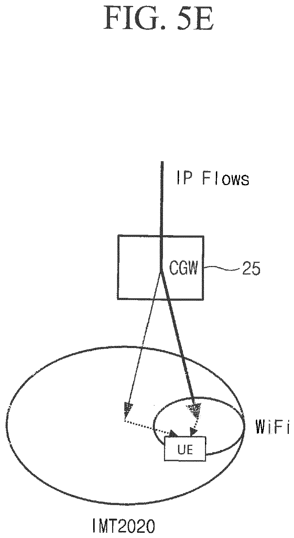

FIG. 5E is a view for describing dispersion and transmission of IP flows requiring a high bandwidth in a converged network system 100 according to an exemplary embodiment of the present invention.

As shown in FIG. 5E, the converged gateway (CGW) 25 may also split traffic to the user equipment (UE) while simultaneously accessing a multi-access network such as IMT-2020, WiFi1/WiFi2, or the like, through each access network, with respect to IP flows, such that it is difficult to transmit by one access technology by including data requiring a high bandwidth equal to or larger than a predetermined bandwidth, such as ultra high definition (UHD) or a hologram depending on control of the unified control entity (UCE) 26.

### <Clustering Recognition and Service Recognition-based Handover Utilizing Converged Resource Management>

In the case in which heterogeneous wireless access sections such as IMT-2020, WiFi, or the like are geographically overlapped with each other, when the number of users accessing a specific wireless access section is many or radio resources for accommodating a service demanded by the users are insufficient, QoS of the user service is affected. In this case, when idle resources of adjacent heterogeneous cells geographically overlapped with each other are present (see FIG. 5D), the user equipment is allowed to access the adjacent cells through a device such as the converged gateway (CGW) 25, the unified control entity (UCE) 26, or the like, such that high-quality service is possible. For this purpose, in the present invention, the converged gateway (CGW) 25 determines states of available resources through a converged resource management function depending on control of the unified control entity (UCE) 26 in the converged network as shown in FIG. 3, and may perform a function of allowing the user equipment to again access the heterogeneous cells on the basis of clustering information of users accessing the corresponding access section and recognition information (a transmission modulation mode, a bandwidth, or the like) on service characteristics for traffic of user equipment.

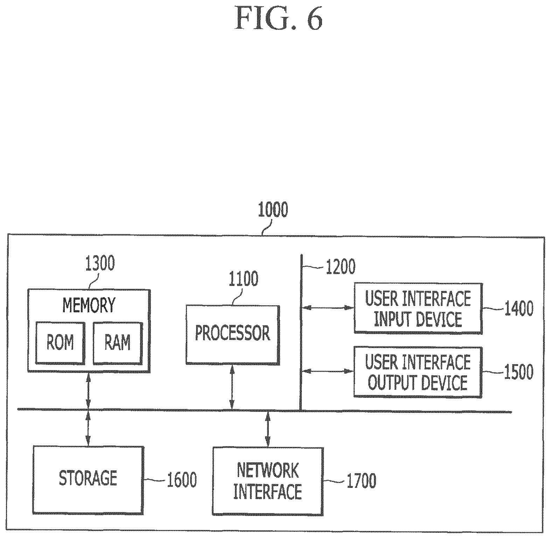

FIG. 6 is a view for describing an example of a method of implementing a converged network system 100 according to an exemplary embodiment of the present invention. The converged gateway (CGW) 25, the unified control entity (UCE) 26, and the like of the converged network system 100 according to an exemplary embodiment of the present invention may be formed of hardware, software, or a combination thereof. For example, the converged gateway (CGW) 25, the unified control entity (UCE) 26, and the like may be implemented by a computing system 1000 as shown in FIG. 6.

The computing system 1000 may include at least one processor 1100, a memory 1300, a user interface input device 1400, a user interface output device 1500, a storage 1600, and a network interface 1700 connected to one another through a bus 1200. The processor 1100 may be a semiconductor device executing processing for instructions stored in a central processing unit (CPU), the memory 1300, and/or the storage 1600. The memory 1300 and the storage 1600 may include various types of volatile or non-volatile storage media. For example, the memory 1300 may be a read-only memory (ROM) 1310 and a random access memory (RAM) 1320.

Therefore, steps of a method or an algorithm described in connection with exemplary embodiments disclosed in the present specification may be directly implemented by a hardware module or a software module directly executed by the processor 1100, or a combination thereof. The software module may reside in a storage medium (that is, the memory 1300 and/or the storage 1600) such as a RAM, a flash memory, a ROM, an erasable programmable ROM (EPROM), an electrically erasable programmable ROM (EEPROM), a register, a hard disk, a detachable disk, or a compact disk-ROM (CD-ROM). An illustrative storage medium is coupled to the processor 1100, and the processor 1100 may read information from the storage medium and write information to the storage medium. Alternatively, the storage medium may be formed integrally with the processor 1100. The processor and the storage medium may also reside in an application specific integrated circuit (ASIC). The ASIC may also reside in user equipment. Alternatively, the processor and the storage medium may reside as individual components in user equipment.

As described above, in the converged network system 100 independent of the wired or wireless access technology according to the present invention, an operator disperses and disposes the converged gateways (CGWs) 25 to accommodate two or more kinds of heterogeneous accesses including different accesses regardless of homogeneous access nodes or a wired or wireless access in a converged scheme, thereby making it possible to flexibly accommodate a new type of service and user equipment/server and other electronic apparatuses in a converged scheme. Therefore, a network that may be easily expanded may be operated. In addition, according to the present invention, a service provider may dispose a service providing server connected to the converged gateways (CGWs) 25 of the edges 28 of the wired IP network 27 regardless of an access scheme, thereby providing a low-delay high-capacity data service through the service providing a server disposed forward toward the subscriber (a device such as the user equipment or the like) interface.

Further, according to the present invention, the operator may manage and control various wired or wireless access networks in a converged scheme, and may efficiently utilize network resources through converged radio resource management between access networks to reduce an operational cost.

Further, according to the present invention, a seamless service may be provided to the user by providing mobility between various wired or wireless access networks. Further, according to the present invention, a larger capacity service that may not be provided through a single access network may be provided through convergence of access networks.

Further, according to the present invention, mobility control is possible regardless of wired or wireless access, and heterogeneous accesses are controlled and are accommodated in a converged scheme. Therefore, states (for example, clustering of users between heterogeneous accesses or the like) of heterogeneous resources are monitored and used for management and allocation of resources, thereby making it possible to improve use efficiency of the resources. Since an existing network is a network configured by only a single access technology, it has only to manage and control one resource. However, in a single network or a converged network accommodating heterogeneous accesses as in the present invention, the unified control entity (UCE) 26 and the converged gateways (CGWs) 25 monitor states of heterogeneous resources depending on various accesses in order to manage and allocate the resources.

The converged gateway (CGW) 25 may perform traffic steering to a heterogeneous network having a resource margin on the basis of converged management for the states of the heterogeneous resources as described above. For example, the converged gateway (CGW) 25 may recognize an application (for example, a bandwidth, video traffic, or the like) to automatically change a route to a heterogeneous network to which a subscriber is connected in cooperation with a control system such as the unified control entity (UCE) 26, or the like.

In addition, in the present invention, two or more kinds of heterogeneous accesses including different accesses regardless of homogeneous access nodes or a wired or wireless access are accommodated in a converged scheme, such that the converged gateways (CGWs) 25 may simultaneously transmit (disperse and transmit) data (for example, data requiring a high bandwidth or the like) required for communication to the heterogeneous accesses. That is, the converged gateways (CGWs) 25 may also split traffic having a high bandwidth to user equipment (UE) simultaneously accessing a multi-access network having a resource margin through each access network on the basis of monitoring of the states of the heterogeneous resources.

The present invention has been illustratively described hereinabove. It will be appreciated by a person of ordinary skill in the art that various modifications and alterations may be made without departing from the essential characteristics of the present invention.

Accordingly, the exemplary embodiments disclosed in the present invention are not to limit the spirit of the present invention, but are to describe the present invention, and the scope of the present invention is not limited by the exemplary embodiments. The scope of the present invention should be interpreted by the following claims.

### <Description of symbols>

IMT-2020 base station 20
WiFi access point 21
wired node 23
converged gateway(CGW) 25
unified control entity(UCE) 26

## Claims

1. A converged network system (100) for converged accommodation of a multi-access network with various network access technologies, comprising:
one or more converged gateways (25) disposed on a converged wired internet protocol, IP, network for transmitting traffic, wherein the one or more converged gateways (25) are arranged to accommodate access nodes of the various network access technologies, wherein the one or more converged gateways (25) are configured to:
receive a route of transmitted and received IP flows through a micro-flow traffic control function from a unified control entity (26); and
in view of the received route of transmitted and received IP flows through the micro-flow traffic control function, separate and manage/control traffic for each subscriber or each service in an IP layer, and communicate, on the basis of IP packets, with homogeneous access nodes or two or more kinds of heterogeneous access nodes, connected to a backhaul, independent of access technology of the homogeneous access nodes and the two or more kinds of heterogeneous access nodes, wherein IP packet-based communication control is performed between the one or more converged gateways (25) and at least one of the following the homogeneous access nodes and the two or more kinds of heterogeneous access nodes regardless of access schemes of the homogeneous access nodes and of the two or more kinds of heterogeneous access nodes; and
the unified control entity (26) configured to:
manage and control the one or more converged gateways (25);
provide the route of transmitted and received IP flows to the converged gateways (25) through the micro-flow traffic control function for executing the separating and the managing/controlling of the traffic for each subscriber or each service at the converged gateways (25); and
perform at least one of control functions including user authentication control, access control, user equipment mobility control, service call control for the IP flows, mobility control, and quality of service, QoS, control through the one or more converged gateways (25), wherein the unified control entity (26) interfaces at least one of the following the homogeneous access nodes and the two or more kinds of heterogeneous access nodes by use of a same signaling system regardless of access schemes of the homogeneous access nodes and of the two or more kinds of heterogeneous access nodes, and wherein the unified control entity (26) is arranged to execute a converged management of radio resources in cells on basis of IP packets transmitted and/or received through the cells for collecting cell-related data .

2. The converged network system (100) of claim 1, wherein
the converged network system (100) accommodates the homogeneous access nodes or the heterogeneous access nodes in a converged scheme, accommodates two or more kinds of heterogeneous accesses including different accesses regardless of homogeneous access or wired or wireless access in a converged scheme, and accommodates a new type of service and device, through the converged gateways (25) disposed at edges of the converged wired IP network.

3. The converged network system (100) of claim 1 or 2, wherein
in a structure of the converged network system (100) controlling and accommodating two or more kinds of heterogeneous accesses in a converged scheme, the converged gateway (25) and the unified control entity (26) monitor states of heterogeneous resources and use the states of the heterogeneous resources for managing and allocating resources.

4. The converged network system (100) of claim 3, wherein
the converged gateways (25) perform traffic steering to a heterogeneous network having a resource margin on the basis of the monitoring of the states of the heterogeneous resources.

5. The converged network system (100) of claim 3, wherein
the converged gateways (25) split traffic to user equipment simultaneously accessing the multi-access network having a resource margin through each access network on the basis of the monitoring of the states of the heterogeneous resources.

6. The converged network system (100) of one of claims 1 to 5, wherein:
a service providing server is connected to the converged gateway (25) disposed at an edge on the converged wired IP network so that the service providing server is disposed forward toward a subscriber device regardless of an access scheme.

7. The converged network system (100) of one of claims 1 to 6, wherein
the unified control entity (26) controls mobility of user equipment and mobility of IP flows for handover to a second converged gateway (25) so that the user equipment accesses the converged wired IP network in an anchor-free scheme with respect to movement of the user equipment accessing the converged wired IP network through a first converged gateway (25), while managing the user equipment on the basis of an IP address system in which an identifier (ID) and a locator are separated from each other.

8. The converged network system (100) of one of claims 1 to 7, wherein
the mobility control includes mobility control in homogeneous accesses including mobility control between wireless access-wireless access.

9. The converged network system (100) of one of claims 1 to 8, wherein
the mobility control includes mobility control in heterogeneous accesses including mobility control between wireless access-wired access or mobility control between IMT-2020 access-WiFi access.

10. The converged network system (100) of one of claims 1 to 9, wherein
the unified control entity (26) controls the converged gateway (25) to determine states of available resources on the basis of converged resource management of heterogeneous access networks and divide traffic of a plurality of IP flows in an IP flow unit to support mobility of the IP flows, with respect to user equipment simultaneously accessing the multi-access network.

11. The converged network system (100) of claim 10, wherein
the unified control entity (26) controls the converged gateway (25) to disperse and transmit IP flows including data having a predetermined bandwidth or more to the user equipment through the multi-access network.

12. The converged network system (100) of one of claims 1 to 11, further comprising
edge unified control entities dispersed and disposed at edges of the converged wired IP network and logically performing at least one of the control functions.

## Patentansprüche

1. Konvergiertes Netzsystem (100) für die konvergierte Aufnahme eines Mehrfachzugriffsnetzes mit verschiedenen Netzzugriffstechnologien, das Folgendes umfasst:
ein oder mehrere konvergierte Gateways (25), die in einem konvergierten drahtgebundenen Internetprotokollnetz, IP-Netz, zum Übertragen von Verkehr angeordnet sind, wobei das eine oder die mehreren konvergierten Gateways (25) ausgelegt sind, Zugriffsknoten der verschiedenen Netzzugriffstechnologien aufzunehmen, und das eine oder die mehreren konvergierten Gateways (25) konfiguriert sind zum
Empfangen einer Route gesendeter und empfangener IP-Ströme über eine Mikrostromverkehrssteuerfunktion von einer vereinigten Steuerentität (26); und
in Anbetracht der empfangenen Route gesendeter und empfangener IP-Ströme über die Mikrostromverkehrssteuerfunktion Trennen und Managen/Steuern von Verkehr für jeden Teilnehmer oder jeden Dienst in einer IP-Schicht und Kommunizieren auf der Grundlage von IP-Paketen mit homogenen Zugriffsknoten oder zwei oder mehr Arten heterogener Zugriffsknoten, die mit einer Rückstrecke verbunden sind, unabhängig von der Zugriffstechnologie der homogenen Zugriffsknoten oder der zwei oder mehr Arten heterogener Zugriffsknoten, wobei eine Kommunikationssteuerung auf der Grundlage von IP-Paketen zwischen dem einen oder den mehreren konvergierten Gateways (25) und den homogenen Zugriffsknoten und/oder den zwei oder mehr Arten heterogener Zugriffsknoten ungeachtet der Zugriffsschemas der homogenen Zugriffsknoten und der zwei oder mehr Arten heterogener Zugriffsknoten durchgeführt wird; und
die vereinigte Steuerentität (26) konfiguriert ist zum
Managen und Steuern des einen oder der mehreren konvergierten Gateways (25);
Liefern der Route gesendeter und empfangener IP-Ströme zu den konvergierten Gateways (25) über die Mikrostromverkehrssteuerfunktion zum Ausführen des Trennens und des Managens/Steuerns des Verkehrs für jeden Teilnehmer oder jeden Dienst bei den konvergierten Gateways (25) und
Durchführen mindestens einer von Steuerfunktionen, die eine Anwenderauthentifizierungssteuerung, eine Zugriffssteuerung, eine Anwendergerätmobilitätssteuerung, eine Dienstaufrufsteuerung für die IP-Ströme, eine Mobilitätssteuerung und eine Dienstqualitätssteuerung, QoS-Steuerung, über das eine oder die mehreren konvergierten Gateways (25) enthalten, wobei die vereinigte Steuerentität (26) die homogenen Zugriffsknoten und/oder die zwei oder mehr Arten heterogener Zugriffsknoten unter Verwendung desselben Signalisierungssystems ungeachtet der Zugriffsschemas der homogenen Zugriffsknoten und der zwei oder mehr Arten heterogener Zugriffsknoten koppelt und wobei die vereinigte Steuerentität (26) ausgelegt ist, ein konvergiertes Management von Funkbetriebsmitteln in Zellen auf der Grundlage von IP-Paketen, die über die Zellen zum Sammeln zellenbezogener Daten gesendet und/oder empfangen wurden, auszuführen.

2. Konvergiertes Netzsystem (100) nach Anspruch 1, wobei
das konvergierte Netzsystem (100) die homogenen Zugriffsknoten oder die heterogenen Zugriffsknoten in ein konvergiertes Schema aufnimmt, zwei oder mehr Arten heterogener Zugriffe, die verschiedene Zugriffe enthalten, ungeachtet von homogenem Zugriff oder drahtgebundenem oder drahtlosem Zugriff in ein konvergiertes Schema aufnimmt und einen neuen Typ von Dienst und Vorrichtung über die konvergierten Gateways (25), die an Rändern des konvergierten drahtgebundenen IP-Netzes angeordnet sind, aufnimmt.

3. Konvergiertes Netzsystem (100) nach Anspruch 1 oder 2, wobei
in einer Struktur des konvergierten Netzsystems (100), das zwei oder mehr Arten heterogener Zugriffe in ein konvergiertes Schema steuert und aufnimmt, das konvergierte Gateway (25) und die vereinigte Steuerentität (26) Zustände von heterogenen Betriebsmitteln überwachen und die Zustände der heterogenen Betriebsmittel zum Managen und Zuordnen von Betriebsmitteln verwenden.

4. Konvergiertes Netzsystem (100) nach Anspruch 3, wobei
die konvergierten Gateways (25) eine Verkehrslenkung zu einem heterogenen Netz, das eine Betriebsmittelmarge besitzt, auf der Grundlage des Überwachens der Zustände der heterogenen Betriebsmittel durchführen.

5. Konvergiertes Netzsystem (100) nach Anspruch 3, wobei
die konvergierten Gateways (25) Verkehr zu Anwendergeräten, die auf das Mehrfachzugriffsnetz, das eine Betriebsmittelmarge besitzt, über jedes Zugriffsnetz auf der Grundlage des Überwachens der Zustände der heterogenen Betriebsmittel gleichzeitig zugreifen, teilen.

6. Konvergiertes Netzsystem (100) nach einem der Ansprüche 1 bis 5, wobei
ein dienstbereitstellender Server mit dem konvergierten Gateway (25), das an einem Rand an dem konvergierten drahtgebundenen IP-Netz angeordnet ist, derart verbunden ist, dass der dienstbereitstellende Server ungeachtet eines Zugriffsschemas nach vorne in Richtung einer Teilnehmervorrichtung angeordnet ist.

7. Konvergiertes Netzsystem (100) nach einem der Ansprüche 1 bis 6, wobei
die vereinigte Steuerentität (26) die Mobilität von Anwendergeräten und die Mobilität von IP-Strömen zur Übergabe zu einem zweiten konvergierten Gateway (25) derart steuert, dass das Anwendergerät auf das konvergierte drahtgebundene IP-Netz in einem verankerungsfreien Schema in Bezug auf eine Bewegung des Anwendergeräts, das auf das konvergierte drahtgebundene IP-Netz über ein erstes konvergiertes Gateway (25) zugreift, zugreift, während sie das Anwendergerät auf der Grundlage eines IP-Adresssystems, in dem eine Kennung (ID) und ein Locator voneinander getrennt sind, managt.

8. Konvergiertes Netzsystem (100) nach einem der Ansprüche 1 bis 7, wobei
die Mobilitätssteuerung eine Mobilitätssteuerung in homogenen Zugriffen, die eine Mobilitätssteuerung zwischen Drahtloszugriff-Drahtloszugriff enthalten, enthält.

9. Konvergiertes Netzsystem (100) nach einem der Ansprüche 1 bis 8, wobei
die Mobilitätssteuerung eine Mobilitätssteuerung in heterogenen Zugriffen, die eine Mobilitätssteuerung zwischen Drahtloszugriff-drahtgebundener Zugriff oder eine Mobilitätssteuerung zwischen IMT-2020-Zugriff-Wi-Fi-Zugriff enthalten, enthält.

10. Konvergiertes Netzsystem (100) nach einem der Ansprüche 1 bis 9, wobei
die vereinigte Steuerentität (26) das konvergierte Gateway (25) steuert, in Bezug auf Anwendergeräte, die auf das Mehrfachzugriffsnetz gleichzeitig zugreifen, Zustände verfügbarer Betriebsmittel auf der Grundlage eines konvergierten Betriebsmittelmanagements heterogener Zugriffsnetze zu bestimmen und Verkehr von mehreren IP-Strömen in einer IP-Stromeinheit zu teilen, um die Mobilität der IP-Ströme zu unterstützen.

11. Konvergiertes Netzsystem (100) nach Anspruch 10, wobei
die vereinigte Steuerentität (26) das konvergierte Gateway (25) steuert, IP-Ströme, die Daten enthalten, die eine vorgegebene Bandbreite oder mehr besitzen, über das Mehrfachzugriffsnetz zu den Anwendergeräten zu verteilen und zu übertragen.

12. Konvergiertes Netzsystem (100) nach einem der Ansprüche 1 bis 11, das ferner Folgendes umfasst:
am Rand vereinigte Steuerentitäten, die an Rändern des konvergierten drahtgebundenen IP-Netzes verteilt und angeordnet sind und mindestens eine der Steuerfunktionen logisch durchführen.

## Revendications

1. Système de réseau convergent (100) pour l'hébergement convergent d'un réseau multi-accès avec diverses technologies d'accès au réseau, comprenant:
une ou plusieurs passerelles convergentes (25) disposées sur un réseau de protocole internet câblé convergent, IP, pour la transmission du trafic, dans lequel la ou les passerelles convergentes (25) sont disposées de manière à accueillir les nœuds d'accès des diverses technologies d'accès au réseau, dans lequel la ou les passerelles convergentes (25) sont configurées pour:
recevoir un itinéraire des flux IP transmis et reçus par une fonction de contrôle de micro-flux de trafic d'une entité de contrôle unifiée (26)
compte tenu de l'itinéraire reçu des flux IP transmis et reçus par la fonction de contrôle du micro-flux, séparer et gérer/contrôler le trafic pour chaque abonné ou chaque service dans une couche IP, et communiquer, sur la base de paquets IP, avec des nœuds d'accès homogènes ou deux ou plusieurs types de nœuds d'accès hétérogènes, connectés à un réseau de transmission, indépendamment de la technologie d'accès des nœuds d'accès homogènes et des deux ou plusieurs types de nœuds d'accès hétérogènes, dans lequel le contrôle de la communication par paquets IP est effectué entre une ou plusieurs passerelles convergentes (25) et au moins l'un des nœuds d'accès homogènes suivants et les deux ou plusieurs types de nœuds d'accès hétérogènes indépendamment des schémas d'accès des nœuds d'accès homogènes et des deux ou plusieurs types de nœuds d'accès hétérogènes; et
l'entité de contrôle unifiée (26) configurée pour:
gérer et contrôler une ou plusieurs passerelles convergentes (25) ;
fournir l'itinéraire des flux IP émis et reçus vers les passerelles convergentes (25) par le biais de la fonction de contrôle du trafic des micro-flux pour exécuter la séparation et la gestion/contrôle du trafic pour chaque abonné ou chaque service au niveau des passerelles convergentes (25); et
assurer au moins une des fonctions de contrôle, notamment le contrôle de l'authentification des utilisateurs, le contrôle d'accès, le contrôle de la mobilité des équipements des utilisateurs, le contrôle des appels de service pour les flux IP, le contrôle de la mobilité et de la qualité de service, la QoS, le contrôle par une ou plusieurs passerelles convergentes (25), dans lequel l'entité de commande unifiée (26) interface au moins l'un des nœuds d'accès homogènes suivants et les deux types ou plus de nœuds d'accès hétérogènes en utilisant un même système de signalisation indépendamment des schémas d'accès des nœuds d'accès homogènes et des deux types ou plus de nœuds d'accès hétérogènes, et dans lequel l'entité de commande unifiée (26) est agencée pour exécuter une gestion convergente des ressources radio dans les cellules sur la base des paquets IP transmis et/ou reçus par les cellules pour collecter des données relatives aux cellules.

2. Système de réseau convergent (100) selon la revendication 1, dans lequel
le système de réseau convergent (100) prend en charge les nœuds d'accès homogènes ou les nœuds d'accès hétérogènes dans un schéma convergent, prend en charge deux ou plusieurs types d'accès hétérogènes, y compris différents accès indépendamment de l'accès homogène ou de l'accès câblé ou sans fil dans un schéma convergent, et prend en charge un nouveau type de service et de dispositif, par le biais des passerelles convergentes (25) disposées aux extrémités du réseau IP câblé convergent.

3. Système de réseau convergent (100) selon les revendications 1 ou 2, dans lequel
dans une structure du système de réseau convergent (100) contrôlant et prenant en charge deux ou plusieurs types d'accès hétérogènes dans un schéma convergent, la passerelle convergente (25) et l'entité de contrôle unifiée (26) surveillent les états des ressources hétérogènes et utilisent les états des ressources hétérogènes pour gérer et allouer les ressources.

4. Système de réseau convergent (100) selon la revendication 3, dans lequel
les passerelles convergentes (25) effectuent le pilotage du trafic vers un réseau hétérogène disposant d'une marge de ressources sur la base de la surveillance des états des ressources hétérogènes.

5. Système de réseau convergent (100) selon la revendication 3, dans lequel
les passerelles convergentes (25) divisent le trafic vers les équipements des utilisateurs accédant simultanément au réseau multi-accès disposant d'une marge de ressources à travers chaque réseau d'accès sur la base de la surveillance des états des ressources hétérogènes.

6. Système de réseau convergent (100) selon l'une des revendications 1 à 5, dans lequel :
un serveur fournisseur de services est connecté à la passerelle convergente (25) disposée à un bord du réseau IP câblé convergent, de sorte que le serveur fournisseur de services est disposé en avant vers un dispositif d'abonné, quel que soit le schéma d'accès.

7. Système de réseau convergent (100) selon l'une des revendications 1 à 6, dans lequel
l'entité de contrôle unifiée (26) contrôle la mobilité de l'équipement utilisateur et la mobilité des flux IP pour le transfert vers une deuxième passerelle convergente (25), de sorte que l'équipement utilisateur accède au réseau IP câblé convergent selon un schéma sans ancrage en ce qui concerne le mouvement de l'équipement utilisateur accédant au réseau IP câblé convergent par une première passerelle convergente (25), tout en gérant l'équipement utilisateur sur la base d'un système d'adresses IP dans lequel un identifiant (ID) et un localisateur sont séparés l'un de l'autre.

8. Système de réseau convergent (100) selon l'une des revendications 1 à 7, dans lequel
le contrôle de la mobilité comprend le contrôle de la mobilité dans les accès homogènes, y compris le contrôle de la mobilité entre les accès sans fil.

9. Système de réseau convergent (100) selon l'une des revendications 1 à 8, dans lequel
le contrôle de la mobilité inclut le contrôle de la mobilité dans les accès hétérogènes, y compris le contrôle de la mobilité entre les accès sans fil - accès câblé ou le contrôle de la mobilité entre les accès IMT-2020 - accès WiFi.

10. Système de réseau convergent (100) selon l'une des revendications 1 à 9, dans lequel
l'entité de contrôle unifiée (26) contrôle la passerelle convergente (25) pour déterminer les états des ressources disponibles sur la base de la gestion convergente des ressources des réseaux d'accès hétérogènes et diviser le trafic d'une pluralité de flux IP dans une unité de flux IP pour soutenir la mobilité des flux IP, en ce qui concerne les équipements des utilisateurs accédant simultanément au réseau multi-accès.

11. Système de réseau convergent (100) selon la revendication 10, dans lequel
l'entité de contrôle unifiée (26) contrôle la passerelle convergente (25) pour disperser et transmettre les flux IP, y compris les données ayant une largeur de bande prédéterminée ou plus, à l'équipement de l'utilisateur par le biais du réseau multi-accès.

12. Système de réseau convergent (100) selon l'une des revendications 1 à 11, comprenant en outre
des entités de contrôle unifiées en périphérie, dispersées et disposées en périphérie du réseau IP câblé convergent et assurant logiquement au moins une des fonctions de contrôle.
